# EUROPEAN PATENT SPECIFICATION

(11) **EP 1 724 187 B1**
(45) Date of publication and mention of the grant of the patent: **19.09.2007**
(21) Application number: 05104084.8
(22) Date of filing: 17.05.2005
(51) Int. Cl.: B62K 11/10, B62K 25/28

(54) **Suspension device for a scooter engine**
Federungsvorrichtung für einen Rollermotor
Dispositif de suspension pour un moteur de scooter

(43) Date of publication of application: 22.11.2006
(73) Proprietor: Kwang Yang Motor Co., Ltd., Kaohsiung (TW)
(72) Inventor: Chen, Yu-Kun, Kaohsiung (TW); Ting, Hsin-Chih, Yun Lin Hsien (TW)
(74) Representative: Fleuchaus, Andrea

(56) References cited:
- EP-A- 0 621 171
- US-A1- 2003 047 930

## Description

The invention relates to a suspension device, more particularly to a suspension device for a scooter engine.

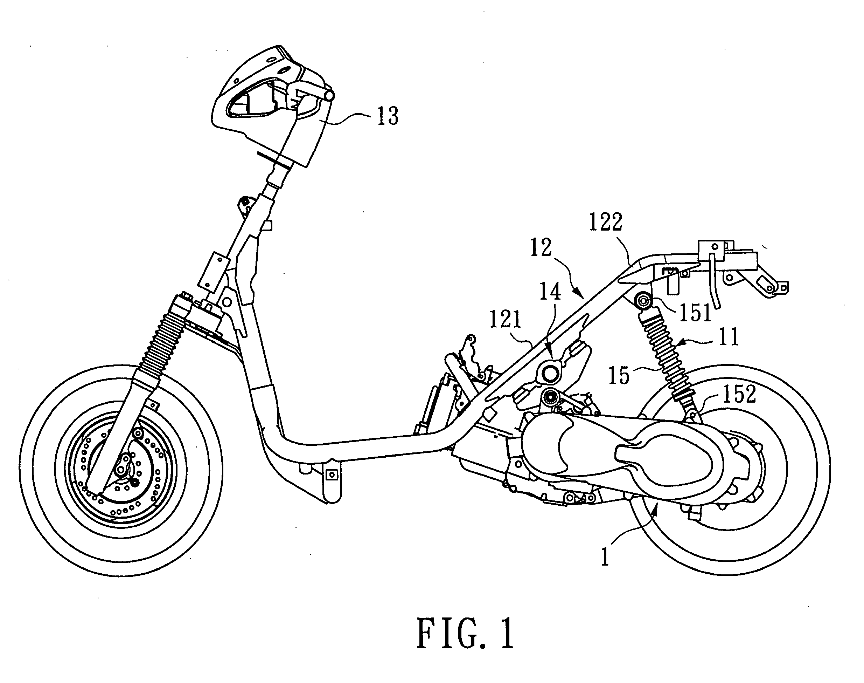

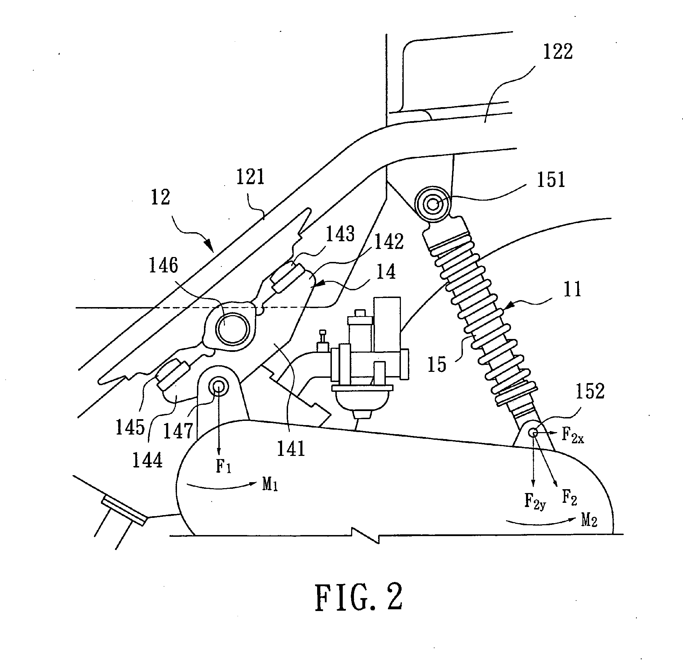

Referring to Figures 1 and 2, a known scooter includes an engine 1 supported on a frame 12 by a conventional suspension device 11, a head 13, and an outer shell unit (not shown). The frame 12 includes an inclined frame portion 121 that extends upwardly and rearwardly away from the head 13, and a generally horizontal extension portion 122 that extends rearwardly from a rear end of the inclined portion 121 away from the head 13. The suspension device 11 includes a connecting piece 14 and an inclined spring-loaded shock absorber 15.

The connecting piece 14 includes a main body 141 that has a rear upper end 142 with a fixed upper cushion member 143, and a front lower end 144 with a fixed lower cushion member 145, an upper pivot portion 146 connected pivotally to the inclined frame portion 121 of the frame 12, and a lower pivot portion 147 disposed below the upper pivot portion 146 and connected pivotally to a front end of the engine 1.

The shock absorber 15 has an upper end 151 connected pivotally to the extension portion 122 of the frame 12, and a lower end 152 connected pivotally to a rear end of the engine 1. The upper end 151 is disposed in front of the lower end 152.

As such, the engine 1 exerts a downward force (F₁) on the connecting piece 14, and an inclined force (F₂) on the shock absorber 15 by virtue of gravity. The inclined force (F₂) is exerted in a direction parallel to the shock absorber 15, and has a rearward horizontal component (F₂ₓ) and a downward vertical component (F_{2y}). Thus, a counterclockwise front torque (M₁) is imparted about the lowerpivotportion147, and a counterclockwise rear torque (M₂) is imparted about the lower end 152 of the shock absorber 15. Because the front and rear torques (M₁, M₂) have the same direction and because the lower pivot portion 147 is disposed in front of the upper pivot portion 146, the connecting piece 14 tends to rotate about the upper pivot portion 146 in a counterclockwise direction. This causes the upper cushion member 143 to press against the inclined frame portion 121 of the frame 12. As a result, however, the upper cushion member 143 experiences quick wear, and needs frequent replacement.

Therefore, the main object of the present invention is to provide a suspension device for a scooter engine that can overcome the aforesaid drawback associated with the prior art.

According to the present invention, a suspension device for a scooter engine is adapted to be mounted on a frame of a scooter. The scooter engine has front and rear ends. The frame includes an inclined frame portion that extends upwardly and rearwardly, and an extension portion that extends rearwardly from a rear end of the inclined portion.

The suspension device comprises a connecting piece and an inclined spring-loaded shock absorber.

The connecting piece has an upper pivot portion connected pivotally to the inclined frame portion of the frame, a lower pivot portion disposed below the upper pivot portion and connected pivotally to the front end of the engine, a rear upper end that is provided with a fixed upper cushion member for engagement with the inclined frame portion of the frame, and a front lower end that is opposite to the rear upper end and that is provided with a fixed lower cushion member for engagement with the inclined frame portion of the frame. The upper and lower pivot portions are disposed between the rear upper end and the front lower end.

The spring-loaded shock absorber has an upper end connected pivotally to the extension portion of the frame, and a lower end connected pivotally to the rear end of the engine. The lower end of the shock absorber is in front of the upper end of the shock absorber so as to prevent the upper cushion member from rotating about the upper pivot portion of the connecting piece in a direction toward the inclined frame portion of the frame.

Other features and advantages of the present invention will become apparent in the following detailed description of the preferred embodiments with reference to the accompanying drawings, of which:
Figure 1 is a schematic side view of a known scooter mounted with a conventional suspension device for the scooter engine, an outer shell unit being removed for better illustration;
Figure 2 is a schematic side view of the known conventional suspension device for the scooter engine;
Figure 3 is a schematic side view of a first preferred embodiment of a suspension device for a scooter engine according to the present invention; and
Figure 4 is a schematic side view of a second preferred embodiment of a suspension device for a scooter engine according to the present invention.

Before the present invention is described in greater detail with reference to the accompanying preferred embodiments, it should be noted herein that like elements are denoted by the same reference numerals throughout the disclosure.

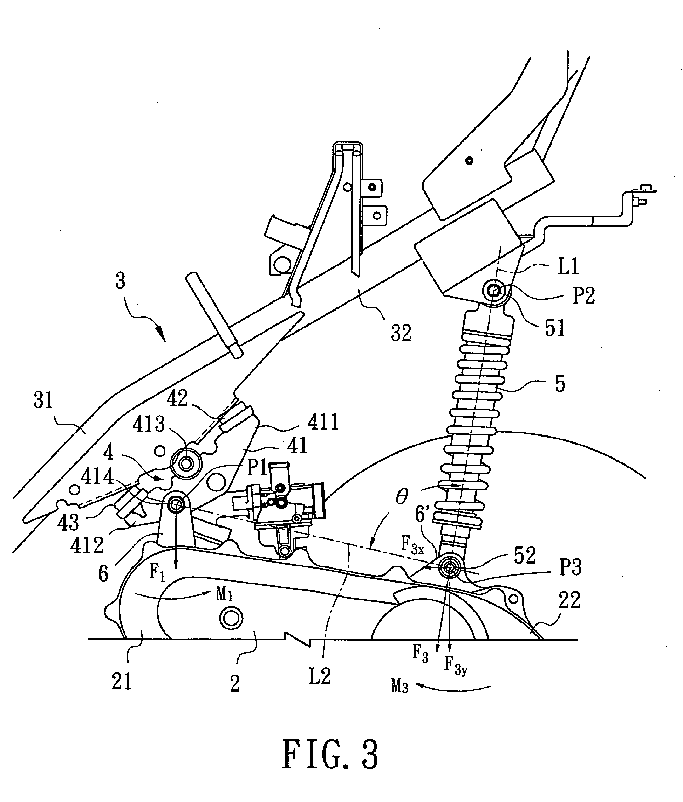

Referring to Figure 3, the first preferred embodiment of a suspension device according to the present invention supports a scooter engine 2 on a frame 3 of a scooter. The scooter engine 2 has front and rear ends 21, 22. The frame 3 includes an inclined frame portion 31 that extends upwardly and rearwardly, and an extension portion 32 that extends rearwardly from a rear end of the inclined portion 31.

The suspension device includes a connecting piece 4 and an inclined spring-loaded shock absorber 5.

The connecting piece 4 includes a main body 41 having an upper pivot portion 413 connected pivotally to the inclined frame portion 31 of the frame 3, a lower pivot portion 414 disposed below the upper pivot portion 413 and connected pivotally to a front pivot lug 6 extending from the front end 21 of the engine 2 at a first pivot point (P1), a rear upper end 411 that is provided with a fixed upper cushion member 42 for engagement with the inclined frame portion 31 of the frame 3, and a front lower end 412 that is opposite to the rear upper end 411 and that is provided with a fixed lower cushion member 43 for engagement with the inclined frame portion 31 of the frame 3. The upper and lower pivot portions 413, 414 are disposed between the rear upper end 411 and the front lower end 412.

The shock absorber 5 has an upper end 51 connected pivotally to the extension portion 32 of the frame 3 at a second pivot point (P2), and a lower end 52 connected pivotally to a rear pivot lug 6' extending from the rear end 22 of the engine 2 at a third pivot point (P3). The lower end 52 of the shock absorber 5 is in front of the upper end 51 of the shock absorber 5.

A first line (L1) interconnects the second and third pivot points (P2, P3). A second line (L2) interconnects the first and third pivot points (P1, P3), and forms an acute angle (θ) with respect to the first line (L1).

As such, the engine 2 exerts a downward force (F₁) on the lower pivot portion 414, and an inclined force (F₃) on the shock absorber 5 by virtue of gravity. The inclined force (F₃) is exerted in a direction parallel to the shock absorber 5, and has a frontward horizontal component (F₃ₓ) and a downward vertical component (F_{3y}). Thus, a counterclockwise front torque (M₁) is imparted about the first pivot point (P1), and a clockwise rear torque (M₃) is imparted about the third pivot point (P3). The rear torque (M₃) is larger than or equal to the front torque (M₁). Because the front and rear torques (M₁, M₃) have opposite directions and because the lower pivot portion 414 is disposed in front of the upper pivot portion 413, rotation of the connecting piece 4 about the upper pivot portion 413 in a counterclockwise direction can be prevented or at least limited. This causes the upper cushion member 42 to seldom press against the inclined frame portion 31 of the frame 3 so as to lengthen the service life of the upper cushion member 42.

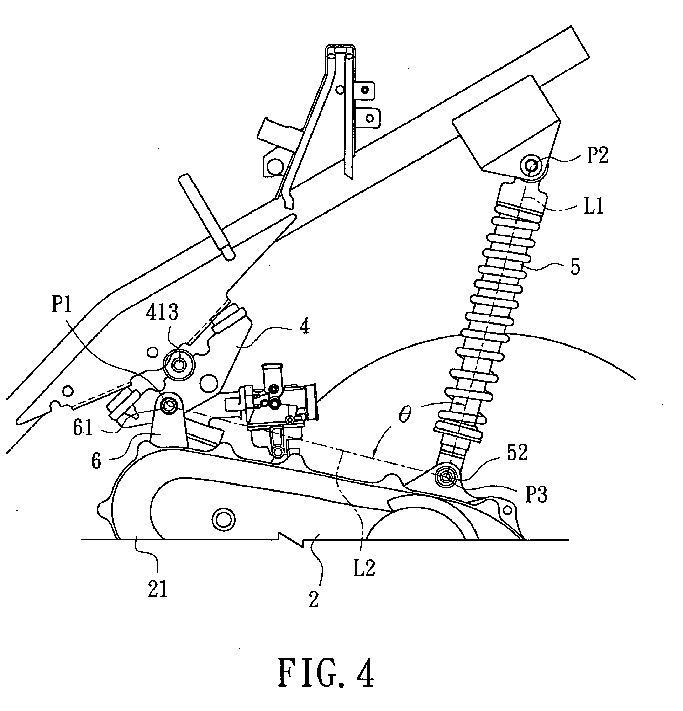

Figure 4 illustrates a second preferred embodiment of a suspension device for a scooter engine according to the present invention, which differs from the first embodiment only in that the first and second lines (L1, L2) define an obtuse angle (θ) therebetween.

## Claims

1. A suspension device for a scooter engine (2), adapted to be mounted on a frame (3) of a scooter, the scooter engine (2) having front and rear ends (21, 22), the frame (3) including an inclined frame portion (31) that extends upwardly and rearwardly, and an extension portion (32) that extends rearwardly from a rear end of the inclined portion (31), the suspension device including:
a connecting piece (4) having an upper pivot portion (413) connected pivotally to the inclined frame portion (31) of the frame (3), a lower pivot portion (414) disposed below the upper pivot portion (413) and connected pivotally to the front end (21) of the engine (2) at a first pivot point (P1), a rear upper end (411) that is provided with a fixed upper cushion member (42) for engagement with the inclined frame portion (31) of the frame (3), and a front lower end (412) that is opposite to the rear upper end (411) and that is provided with a fixed lower cushion member (43) for engagement with the inclined frame portion (31) of the frame (3), the upper and lower pivot portions (413, 414) being disposed between the rear upper end (411) and the front lower end (412); and
a spring-loaded shock absorber (5) having an upper end (51) connected pivotally to the extension portion (32) of the frame (3) at a second pivot point (P2), and a lower end (52) connected pivotally to the rear end (22) of the engine (2) at a third pivot point (P3);
**characterized by:**
the shock absorber (5) being inclined, the lower end (52) of the shock absorber (5) being in front of the upper end (51) of the shock absorber (5) so as to prevent the upper cushion member (42) from rotating about the upper pivot portion (413) of the connecting piece (4) in a direction toward the inclined frame portion (31) of the frame (3).

2. The suspension device as claimed in Claim 1, **characterized in that** a first line (L1) interconnects the second and third pivot points (P2, P3), and a second line (L2) interconnects the first and third pivot points (P1, P3) and forms an acute angle (θ) with respect to the first line (L1).

3. The suspension device as claimed in Claim 1, **characterized in that** a first line (L1) interconnects the second and third pivot points (P2, P3), and a second line (L2) interconnects the first and third pivot points (P1, P3) and forms an obtuse angle (θ) with respect to the first line (L1).

4. The suspension device as claimed in Claim 1, **characterized in that** the engine (2) exerts front and rear torques (M1, M3) respectively on the connecting piece (4) and the shock absorber (5), the rear torque (M3) being larger than or equal to the front torque (M1) .

## Patentansprüche

1. Federungsvorrichtung für einen Rollermotor (2), dazu geeignet, an einem Rahmen (3) eines Rollers montiert zu werden, wobei der Rollermotor (2) ein vorderes und ein hinteres Ende (21, 22) aufweist und der Rahmen (3) einen geneigten Rahmenabschnitt (31), welcher sich nach oben und hinten erstreckt, und einen Fortsatzabschnitt (32), welcher sich von einem hinteren Ende des geneigten Abschnittes (31) nach hinten erstreckt, aufweist, wobei die Federungsvorrichtung umfasst:
ein Verbindungsstück (4) mit einem oberen Schwenkabschnitt (413), der schwenkbar mit dem geneigten Rahmenabschnitt (31) des Rahmens (3) verbunden ist, einem unteren Schwenkabschnitt (414), welcher unterhalb des oberen Schwenkabschnittes (413) angeordnet ist und an einem ersten Drehpunkt (P1) schwenkbar mit dem vorderen Ende (21) des Motors (2) verbunden ist, einem hinteren oberen Ende (411), welches mit einem fixierten oberen Dämpfungselement (42) versehen ist, zum Verbinden mit dem geneigten Rahmenabschnitt (31) des Rahmens (3), und einem vorderen unteren Ende (412), welches dem hinteren oberen Ende (411) entgegengesetzt ist und welches mit einem fixierten unteren Dämpfungselement (43) versehen ist, zum Verbinden mit dem geneigten Rahmenabschnitt (31) des Rahmens (3), wobei der obere und der untere Schwenkabschnitt (413, 414) zwischen dem hinteren oberen Ende (411) und dem vorderen unteren Ende (412) angeordnet sind; und
einen gefederten Stoßdämpfer (5) mit einem oberen Ende (51), welches an einem zweiten Drehpunkt (P2) schwenkbar mit dem Fortsatzabschnitt (32) des Rahmens (3) verbunden ist, und einem unteren Ende (52), welches an einem dritten Drehpunkt (P3) schwenkbar mit dem hinteren Ende (22) des Motors (2) verbunden ist;
**dadurch gekennzeichnet, dass**
der Stoßdämpfer (5) geneigt ist, wobei das untere Ende (52) des Stoßdämpfers (5) sich vor dem oberen Ende (51) des Stoßdämpfers (5) befindet, um zu verhindern, dass das obere Dämpfungselement (42) sich um den oberen Schwenkabschnitt (413) des Verbindungsstücks (4) in einer Richtung zu dem geneigten Rahmenabschnitt (31) des Rahmens (3) dreht.

2. Federungsvorrichtung gemäß Anspruch 1, **dadurch gekennzeichnet, dass** eine erste Linie (L1) den zweiten und den dritten Drehpunkt (P2, P3) miteinander verbindet und eine zweite Linie (L2) den ersten und den dritten Drehpunkt (P1, P3) miteinander verbindet und bezüglich der ersten Linie (L1) einen spitzen Winkel (θ) bildet.

3. Federungsvorrichtung gemäß Anspruch 1, **dadurch gekennzeichnet, dass** eine erste Linie (L1) den zweiten und den dritten Drehpunkt (P2, P3) miteinander verbindet und eine zweite Linie (L2) den ersten und den dritten Drehpunkt (P1, P3) miteinander verbindet und bezüglich der ersten Linie (L1) einen spitzen Winkel (θ) bildet.

4. Federungsvorrichtung gemäß Anspruch 1, **dadurch gekennzeichnet, dass** der Motor (2) ein vorderes bzw. hinteres Drehmoment (M1, M3) auf das Verbindungsstück (4) und den Stoßdämpfer (5) ausübt, wobei das hintere Drehmoment (M3) größer als oder gleich dem vorderen Drehmoment (M1) ist.

## Revendications

1. Un dispositif de suspension pour un moteur de scooter (2), adapté pour être monté sur un cadre (3) d'un scooter, le moteur de scooter (2) ayant des extrémités avant et arrière (21, 22), le cadre (3) incluant une portion de cadre inclinée (31) qui s'étend vers le haut et vers l'arrière, et une portion d'extension (32) qui s'étend vers l'arrière depuis une extrémité arrière de la portion inclinée (31), le dispositif de suspension incluant :
une pièce de connexion (4) ayant une portion pivot supérieure (413) connectée pivotant par rapport à la portion de cadre inclinée (31) du cadre (3), une portion pivot inférieure (414) disposée sous la portion pivot supérieure (413) et connectée pivotant par rapport à l'extrémité avant (21) du moteur (2) à un premier point pivot (P1), une extrémité supérieure arrière (411) qui est munie d'un membre coussinet supérieur fixe (42) pour engagement avec la portion de cadre inclinée (31) du cadre (3) et une extrémité inférieure avant (412) qui est opposée à la portion supérieure arrière (411) et qui est munie d'un membre coussinet inférieur fixe (43) pour engagement avec la portion de cadre inclinée (31) du cadre (3), les portions pivot supérieure et inférieure (413, 414) étant disposées entre l'extrémité supérieure arrière (411) et l'extrémité inférieure avant (412) ; et
un amortisseur à ressort (5) ayant une extrémité supérieure (51) connectée pivotant par rapport à la portion d'extension (32) du cadre (3) à un second point pivot (P2), et une extrémité inférieure (52) connectée pivotant par rapport à l'extrémité arrière (22) du moteur (2) à un troisième point pivot (P3) ;
**caractérisé en ce que**
l'amortisseur (5) étant incliné, l'extrémité inférieure (52) de l'amortisseur (5) étant en avant de l'extrémité supérieure (51) de l'amortisseur (5) de sorte à empêcher le membre coussinet supérieur (42) de tourner autour de la portion pivot supérieure (413) de la pièce de connexion (4) dans une direction vers la portion de cadre inclinée (31) du cadre (3).

2. Le dispositif de suspension comme revendiqué en revendication 1, **caractérisé en ce que** une première ligne (L1) interconnecte les second et troisième points pivot (P2, P3) et une seconde ligne (12) interconnecte les premier et troisième points pivot (P1, P3) et forme un angle aigue (θ) relativement à la première ligne (L1).

3. Le dispositif de suspension comme revendiqué en revendication 1, **caractérisé en ce que** une première ligne (L1) interconnecte les second et troisième points pivot (P2, P3) et une seconde ligne (12) interconnecte les premier et troisième points pivot (P1, P3) et forme un angle obtus (θ) relativement à la première ligne (L1).

4. Le dispositif de suspension comme revendiqué en revendication 1, **caractérisé en ce que** le moteur (2) exerce des couples avant et arrière (M1, M3) respectivement sur la pièce de connexion (4) et l'amortisseur (5), le couple arrière (M3) étant plus grand ou égal au couple avant (M1).
